# EUROPEAN PATENT APPLICATION

(11) **EP 2 784 614 A2**
(43) Date of publication of application: **01.10.2014**
(21) Application number: 14159727.8
(22) Date of filing: 14.03.2014
(51) Int. Cl.: G05B 19/418

(54) **Production system and production method**

(30) Priority: 18.03.2013 JP 2013055242
(71) Applicant: Kabushiki Kaisha Yaskawa Denki, Kitakyushu-shi, Fukuoka 806-0004 (JP)
(72) Inventor: Fukuda, Takuya, Kitakyushu-shi, Fukuoka 806-0004 (JP); Ando, Shingo, Kitakyushu-shi, Fukuoka 806-0004 (JP)
(74) Representative: Viering, Jentschura & Partner Patent- und Rechtsanwälte

(57) **Abstract**

A production system (1) includes: a plurality of production robots (10 to 50) configured to share and perform processing works on a workpiece; a controller (60) configured to control the processing works by the plurality of production robots; and a conveying member (70) configured to convey the workpiece between the plurality of production robots. The controller is configured to: acquire work-delay information on a first production robot in which a processing work is delayed compared with a predetermined processing time; acquire work-ready information on a second production robot that can substitutively perform the processing work being performed by the first production robot; and convey the workpiece from the first production robot to the second production robot using the conveying member based on a result of cross-checking the work-delay information and the work-ready information.

## Description

### BACKGROUND

### 1. Technical Field

This disclosure relates to a production system and a production method.

### 2. Related Art

For example, in the case where various products such as electromechanical products and electronic products are produced, what is called cell production is employed in some time. In the case where this cell production is automated using a plurality of assembling robots, the work may be delayed in some of the robots. Accordingly, a proposed technique makes the subsequent arm robot to perform unperformed work even if the work is temporarily delayed, so as to avoid stopping the subsequent working robot (see, for example, JP-A-2012-218093).

In the above-described robot production system, in the case where a delay occurs, the subsequent working robot is used to reduce the influence of the work delay. However, the influence of the work delay is preferred to be reduced more flexibly.

One object of this disclosure is to provide a production system and a production method that have a more flexible system configuration to reduce a work delay in a robot.

### SUMMARY

A production system according to an aspect of the present disclosure includes: a plurality of production robots configured to share and perform processing works on a workpiece; a controller configured to control the processing works by the plurality of production robots; and a conveying member configured to convey the workpiece between the plurality of production robots. The controller is configured to: acquire work-delay information on a first production robot in which a processing work is delayed compared with a predetermined processing time; acquire work-ready information on a second production robot that can substitutively perform the processing work being performed by the first production robot; and convey the workpiece from the first production robot to the second production robot using the conveying member based on a result of cross-checking the work-delay information and the work-ready information.

### BRIEF DESCRIPTION OF DRAWINGS

Fig. 1 is a block diagram illustrating a schematic configuration of a production system according to a first embodiment;
Fig. 2 is a block diagram illustrating a control mechanism of the production system illustrated in Fig. 1; and
Fig. 3 is a block diagram illustrating a schematic configuration of a production system according to a second embodiment.

### DETAILED DESCRIPTION

In the following detailed description, for purpose of explanation, numerous specific details are set forth in order to provide a thorough understanding of the disclosed embodiments. It will be apparent, however, that one or more embodiments may be practiced without these specific details. In other instances, well-known structures and devices are schematically shown in order to simplify the drawing.

A production system according to an aspect of the present disclosure (this production system) includes: a plurality of production robots configured to share and perform processing works on a workpiece; a controller configured to control the processing works by the plurality of production robots; and a conveying member configured to convey the workpiece between the plurality of production robots. The controller is configured to: acquire work-delay information on a first production robot in which a processing work is delayed compared with a predetermined processing time; acquire work-ready information on a second production robot that can substitutively perform the processing work being performed by the first production robot; and convey the workpiece from the first production robot to the second production robot using the conveying member based on a result of cross-checking the work-delay information and the work-ready information.

With this production system, the more flexible system configuration reduces a work delay in the robot.

Hereinafter, a detailed description will be given of an embodiment of a production system with reference to the accompanying drawings. In the description, the element that is substantially the same or has substantially the same function will be provided with the same reference numeral, and the duplicated description will be omitted.

### (First Embodiment)

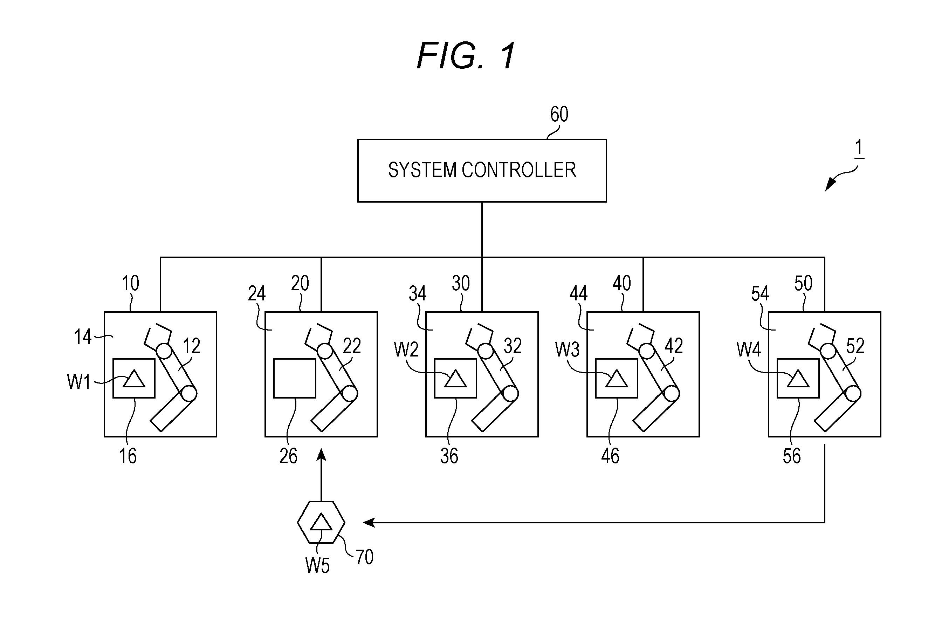

As illustrated in Fig. 1, a production system 1 includes a plurality of assembling robot devices 10, 20, 30, 40, and 50 (hereinafter also referred to as "assembling robot devices 10 to 50"), a system controller 60 (a controller), and a transfer robot 70 (a conveying member).

The system controller 60 integrally controls assembly works (processing works) at the plurality of assembling robot devices 10 to 50 (a plurality of production robots). The transfer robot 70 conveys a workpiece W between the respective assembling robot devices 10 to 50. For example, as illustrated in Fig. 1, the assembling robot devices 10 to 50 are arranged along a workpiece-conveying direction (a direction from the assembling robot device 10 toward the assembling robot device 50) in which workpieces are sequentially conveyed. For example, the assembling robot devices 10 to 50 perform a sequence of assembly works (processing works) such as mounting of a predetermined part for workpiece on the workpiece that is a half-finished product, based on the integrated control by the system controller 60. Accordingly, a predetermined product is produced.

The production system 1 illustrated in Fig. 1 employs the five assembling robot devices 10 to 50 as one example. However, the production system 1 is not limited to this. The production system 1 may include two to four assembling robot devices. Alternatively, the production system 1 may include six or more assembling robot devices.

Here, a description will be given of the assembling robot devices 10 to 50 that constitute the production system 1. The assembling robot device 10 is an assembling robot that allows, for example, six-axis control. The assembling robot device 10 includes a robot arm 12, a workbench 14, a securing unit 16, and a device controller 18. The robot arm 12 is a working member that performs an assembly work for workpiece. The robot arm 12 is secured to the workbench 14. The workbench 14 is a mounting block for performing an assembly work for a workpiece W1. The securing unit 16 secures the workpiece W1 to the workbench 14.

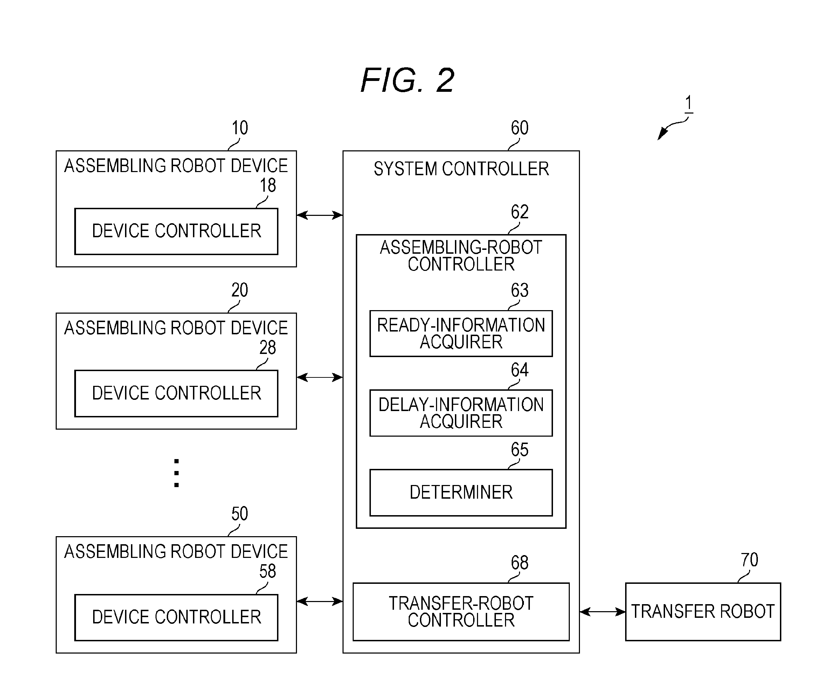

As illustrated in Fig. 2, the device controller 18 is a computer that controls the assembly work of the assembling robot device 10.

The assembling robot devices 20 to 50 each have configurations similar to that of the assembling robot device 10. That is, the assembling robot devices 20 to 50 respectively include robot arms 22, 32, 42, and 52 (the working members), workbenches 24, 34, 44, and 54, securing units 26, 36, 46, and 56, and device controllers 28, 38, 48, and 58 (see Fig. 2).

The respective assembling robot devices 10 to 50 are configured to perform individual assembly works for sharing and performing a sequence of assembly works on the workpiece using the robot arms 12, 22, 32, 42, and 52. Additionally, the respective assembling robot devices 10 to 50 are configured to perform at least a part of assembly work in common (for example, screw-fastening of a member mounted on the workpiece) using the robot arms 12, 22, 32, 42, and 52.

That is, the respective assembling robot devices 10 to 50 are configured to perform at least a part of the assembly work in common (the processing work) without changing specific settings, by exchanging a hand portion at an arm tip, changing a part of settings for a working function, or similar method.

The respective assembling robot devices 10 to 50 may be configured to perform processing (such as application of adhesive and cut of a member) different from processing of other assembling robot devices. In this case, some members such as the robot arm 12 in the respective assembling robot devices 10 to 50 may be different corresponding to the type of the processing.

In Fig. 1, single-arm working robots are illustrated as the assembling robot devices 10 to 50 for example. However, the assembling robot devices 10 to 50 may be different assembling robots such as double arm robots.

The device controllers (the controller) 18, 28, 38, 48, and 58 (hereinafter also referred to as "device controllers 18 to 58") are coupled to the system controller 60 to allow mutual communication. The device controllers 18 to 58 transmit and receive information used for assembly works assigned to the respective assembling robot devices 10 to 50 to/from the system controller 60. This information includes, for example, information on time (work time), progress information on the work in each of the assembling robot devices 10 to 50, and information on work items that can be handled in each of the assembling robot devices 10 to 50. The device controllers 18 to 58 each incorporate a timer that allows time keeping of elapsed time of the work. The device controllers 18 to 58 transmit work-ready information on the assembling robot device or work-delay information in the assembling robot device to the system controller 60 as the progress information on the works in the assembling robot devices 10 to 50.

The work-ready information is, for example, information related to waiting time after a predetermined work has been finished before the subsequent workpiece assembly starts. The work-delay information is, for example, information related to how much work assigned to a predetermined work time has not been finished (or is predicted to be unfinished). That is, the work-delay information is, for example, information related to additional time until all of the work has been completed, the work items that are not finished within the predetermined work time, or similar information.

The assembling robot devices 10 to 50 with this configuration are arranged along the workpiece-conveying direction as described above. The assembling robot devices 10, 20, 30, 40, and 50 perform predetermined assembly works on a workpiece in this order so as to complete a product. The workpiece is handed over between the assembling robot devices 10 to 50, for example, using the robot arm 12 or similar member installed on the assembling robot device 10 or similar device. Alternatively, a belt conveyor may be installed along the assembling robot devices 10 to 50. The robot arm 12 or similar member may be used so as to place an assembled workpiece on the belt conveyor or to take a workpiece for assembly from the belt conveyor.

The system controller 60 is a controller that integrally control assembly motions of the assembling robot devices 10 to 50 as described above in cooperation with the device controllers 18 to 58 that are incorporated in the respective assembling robot devices 10 to 50 and perform individual work controls. The system controller 60 includes a computer that includes a storage unit, an electronic arithmetic unit, an input unit, and a display unit. As illustrated in Fig. 2, the system controller 60 has functions of an assembling-robot controller 62 that integrally controls assembly works in the assembling robot devices 10 to 50 and a transfer-robot controller 68 that controls the transfer robot 70.

For example, when the assembling robot devices 10 to 50 sequentially perform the predetermined assembly works on some workpiece W, the assembling-robot controller 62 controls hand-over timing (work time) of the workpiece between the assembling robot devices 10 to 50 or supply timing of parts for workpiece to each of the assembling robot devices 10 to 50. The assembling-robot controller 62 includes a ready-information acquirer 63, a delay-information acquirer 64, and a determiner 65. The assembling-robot controller 62 periodically monitors the working situations of the assembling robot devices 10 to 50 controlled to hand over the workpiece to the adjacent assembling robot devices 10 to 50 at predetermined timing.

The ready-information acquirer 63 acquires the work-ready information periodically transmitted from each of the assembling robot devices 10 to 50. The ready-information acquirer 63 associates the acquired work-ready information with assembly-work-item data that can be handled and temporarily stores the work-ready information in the storage unit for each of the assembling robot devices 10 to 50.

The delay-information acquirer 64 acquires the work-delay information non-periodically (unexpectedly) transmitted from each of the assembling robot devices 10 to 50. When the delay-information acquirer 64 acquires the work-delay information, the delay-information acquirer 64 outputs the acquired work-delay information to the determiner 65 together with data of the delayed work items and the additional-working-time information.

When the determiner 65 receives the work-delay information from the delay-information acquirer 64, the determiner 65 detects an assembling robot device (a delaying robot device or a first production robot) in which the assembly work is delayed compared with a predetermined assembly time among the plurality of assembling robot devices 10 to 50, based on this work-delay information. In the example of Fig. 1, the delaying robot device is the assembling robot device 50. At the same time, the determiner 65 determines whether or not there is an assembling robot device (a substitutive robot device or a second production robot) that can substitutively perform the assembly work (the work item) being performed by the delaying robot device, during detection of the delaying robot device. That is, the determiner 65 cross-checks the acquired work-delay information and work-ready information so as to determine whether or not the substitutive robot device can substitutively perform the unfinished assembly work of the delaying robot device within a predetermined time.

This determination of the substitutive robot device is made based on the work-ready information acquired by the ready-information acquirer 63 in advance. That is, in this determination, it is determined whether or not any assembling robot device can substitutively perform the unfinished work of the delaying robot device before the next hand-over time of the workpiece or determined whether or not any assembling robot device can perform the same work items as the work items in the delaying robot device. In the example illustrated in Fig. 1, the determiner 65 detects, for example, the assembling robot device 20 as the substitutive robot device that substitutively performs the unfinished work of the delaying robot device 50. Thus, in the case where the determiner 65 determines that the work of some assembling robot device is delayed and a different assembling robot device can substitutively perform this work, the determiner 65 outputs a conveyance instruction signal to the transfer-robot controller 68. This conveyance instruction signal instructs conveying of the workpiece from the delaying robot device to the substitutive robot device.

The transfer-robot controller 68 controls the conveyance of the workpiece by the transfer robot 70. In the case where a work delay occurs during the assembly works of the assembling robot devices 10 to 50, the transfer-robot controller 68 moves the workpiece between the respective devices so as to reduce the delay. Specifically, the transfer-robot controller 68 acquires the workpiece in the middle of the processing (the assembly) from the assembling robot device (for example, the assembling robot device 50) that is determined to be the delaying robot device by the determiner 65 of the assembling-robot controller 62. Subsequently, the transfer-robot controller 68 conveys and hands over this workpiece to the assembling robot device (for example, the assembling robot device 20) that is determined to be the substitutive robot device that can substitutively perform the work of the delaying robot device (for example, the assembling robot device 50) by the determiner 65. The instruction signal from the system controller 60 to the transfer robot 70 is, for example, wirelessly transmitted.

The substitutive robot device (for example, the assembling robot device 20) to which the workpiece in the middle of the assembly is handed over uses an available time to perform the assembly work on the workpiece that has been handed over in the middle of the assembly. Accordingly, the substitutive robot device completes the unfinished assembly of the delaying robot device.

Here, referring again to Fig. 1, a description will be given of a concrete example of a production method for a product using the production system 1.

Firstly, the assembling robot devices 10 to 50 each perform an assigned work in a sequence of assembly works in advance. When the work is finished, the assembling robot devices 10 to 50 convey the assembled workpieces W1 to W5 to the adjacent assembling robot devices 20 to 50 and similar device, using the robot arm 12 and similar member. In this ordinary conveyance, for example, the belt conveyor or the transfer robot may be used.

Subsequently, assume that in any of the assembling robot devices (for example, the assembling robot device 50) during the above-described sequence of assembly works, for example, failure of picking a part for workpiece has led to a situation where a predetermined assembly work on the workpiece W5 is delayed. This failure of picking may occur due to, for example, change in state of light with time in a location for assembly (for example, a plant) in image recognition processing for recognizing the position of the part for workpiece. The system controller 60 acquires the work-delay information from each assembling robot device (for example, the assembling robot device 50) so as to recognize the delay of the work on the workpiece W5.

Subsequently, when a delay of the work in some assembling robot device is detected, the system controller 60 detects a substitutive robot device (for example, the assembling robot device 20) that can substitutively perform the assembly work being performed by this assembling robot device (for example, the assembling robot device 50). The system controller 60 cross-checks the work-ready information periodically acquired from each of the assembling robot devices 10 to 50 so as to detect the substitutive robot device.

In the example illustrated in Fig. 1, the assembling robot device 50 is detected as the delaying robot device in which the assembly work is delayed. On the other hand, the assembling robot device 20 is detected as the substitutive robot device. This assembling robot device 20 has already finished the assembly work on the workpiece W2 that is performed in approximately the same time period as the time period spent on the assembly work of the workpiece W5 by the assembling robot device 50. Accordingly, the workpiece W2 is handed over to the assembling robot device 30. The assembling robot device 10 immediately before the assembling robot device 20 is assembling the workpiece W1 to be a target of the subsequent assembly work of the assembling robot device 20. Accordingly, availability occurs in the work of the assembling robot device 20.

Subsequently, the system controller 60 (the determiner 65) detects that the assembling robot device 20 is the substitutive robot device that can substitutively perform the work of the delaying robot device 50. The system controller 60 uses the transfer robot 70 to convey and hand over the workpiece W5 in the middle of the assembly from the assembling robot device 50 to the assembling robot device 20. The transfer robot 70 may have, for example, a manipulator. In this case, the transfer robot 70 uses the manipulator to hand over the workpiece W5 or perform similar work.

Subsequently, the assembling robot device 20 receives the workpiece W5 from the assembling robot device 50. The assembling robot device 20 substitutively performs the unfinished assembly work of the assembling robot device 50 on the workpiece W5 in the middle of the assembly. Subsequently, the assembling robot device 20 mounts the workpiece W5, on which the assembly work is completed, on the belt conveyor that is an ordinary conveying member or similar member so as to return the workpiece W5 to the ordinary assembly process. On the other hand, the delaying robot device 50 hands over the workpiece W5 in the middle of the assembly to the assembling robot device 20. Accordingly, the assembling robot device 50 can perform a predetermined assembly work on the subsequent workpiece W4. This reduces the work delay as the entire system.

Thus, in the production system 1, the system controller 60 acquires the work-delay information on the delaying robot device (for example, the assembling robot device 50) in which the assembly work is delayed compared with the predetermined assembly time among the plurality of assembling robot devices 10 to 50. At the same time, the system controller 60 acquires the work-ready information on the substitutive robot device (for example, the assembling robot device 20) that can substitutively perform the assembly work being performed by the delaying robot device. Subsequently, the system controller 60 conveys the workpiece using the transfer robot 70 from the delaying robot device to the substitutive robot device, based on the result of cross-checking the acquired work-delay information and work-ready information. Therefore, the production system 1 effectively utilizes the assembling robot device (the substitutive robot device) in the ready state regardless of the assembling robot device in the upstream side or the assembling robot device in the downstream side of the production process. Accordingly, the production system 1 can reduce the work delay in the assembling robot device with a more flexible system configuration.

In the production system 1, the system controller 60 cross-checks the acquired work-delay information and work-ready information to determine whether or not the substitutive robot device can substitutively perform the unfinished assembly work of the delaying robot device within a predetermined time. In the case where the substitutive robot device can substitutively perform the work, the system controller 60 conveys the workpiece from the delaying robot device to the substitutive robot device using the transfer robot 70. Thus, the system controller 60 conveys the workpiece using the transfer robot 70 after determining whether or not the substitutive robot device can substitutively perform the work. Accordingly, the production system 1 can effectively utilize the assembling robot device in the ready state with more certainty.

In the production system 1, the system controller 60 acquires the work-delay information and the work-ready information that are the progress information on the assembly work from the plurality of assembling robot devices 10 to 50. This allows understanding the work-delay state, the substitutive work, and similar state totally in the entire production system 1. This reduces the work delay in the robot with a more flexible system configuration in the production system 1.

The system controller 60 may acquire at least one of the work-delay information and the work-ready information, which are the progress information on the assembly work, from a predetermined assembling robot device (for example, the assembling robot device 50) among the plurality of assembling robot devices 10 to 50. The assembling robot device that becomes a bottleneck when the work is delayed can be estimated by experience. Accordingly, acquiring the progress information only from this device reduces the information volume to be processed by the system controller 60. As a result, the process speed can be accelerated.

### (Second Embodiment)

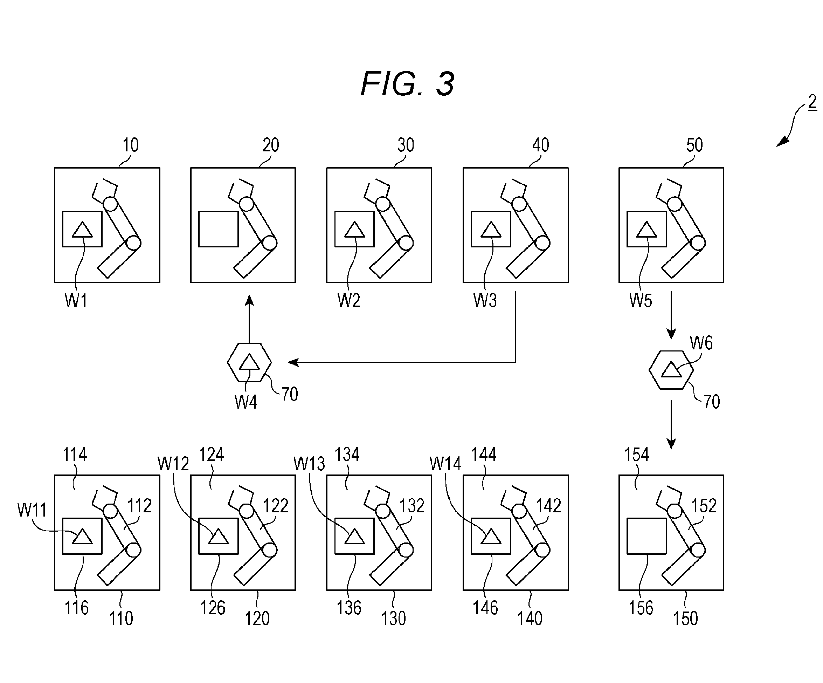

Next, a description will be given of a production system according to a second embodiment with reference to Fig. 3.

A production system 2 according to the second embodiment includes assembling robot devices 110, 120, 130, 140, and 150 (hereinafter also referred to as "assembling robot devices 110 to 150") in addition to the assembling robot devices 10 to 50, the system controller 60, and the transfer robot 70 that constitute the production system 1 according to the first embodiment.

The assembling robot devices 110 to 150 have configurations and arrangements similar to those of the assembling robot devices 10 to 50. The assembling robot devices 110 to 150 respectively include robot arms 112, 122, 132, 142, and 152, workbenches 114, 124, 134, 144, and 154, securing units 116, 126, 136, 146, and 156, and device controllers.

The robot arms 112, 122, 132, 142, and 152 are assembling members (the working members) that perform assembly works on workpieces. The robot arm 112 and similar member are secured to the workbenches 114, 124, 134, 144, and 154. The workbenches 114, 124, 134, 144, and 154 are mounting blocks for performing assembly works on the workpieces. The securing units 116, 126, 136, 146, and 156 secure the workpieces W11 to W14 to the workbench 114 and similar member. The device controllers control the assembly works in the assembling robot device 110 and similar member. The assembling robot devices 110 to 150 are integrally controlled by the system controller 60 similarly to the assembling robot devices 10 to 50.

Thus, the production system 2 includes two production groups. The two production groups includes the assembling robot devices 10 to 50 in a first production group and the assembling robot devices 110 to 150 in a second production group that is a different production group from that of the assembling robot devices 10 to 50 in the first production group. The assembling robot devices 10 to 50 in the first production group share and perform a sequence of assembly works. The assembling robot devices 110 to 150 in the second production group share and perform a sequence of assembly works different from the assembly works in the first production group.

In the production system 2, the workpiece is conveyed from a delaying robot device to a substitutive robot device among the assembling robot devices 10 to 50 and the assembling robot devices 110 to 150 that belong to the different production groups, similarly to the production system 1. The substitutive control in the production system 2 is similar to that of the first embodiment, and will not be further elaborated here. One example of the substitutive control will be described below.

For example, as illustrated in Fig. 3, assume that the assembly works are delayed in the assembling robot devices 40 and 50. In this case, in the production system 2, the assembling robot device 20 is extracted by determination of the determiner 65 as an assembling robot device that performs the delayed work in the assembling robot device 40. In the production system 2, the assembling robot device 150 is extracted by determination of the determiner 65 as an assembling robot device that performs the delayed work in the assembling robot device 50. Subsequently, in the production system 2, the transfer robot 70 conveys the workpiece W4 on which the work is delayed in the assembling robot device 40 to the assembling robot device 20 based on this determination result. The workpiece W6 on which the work is delayed in the assembling robot device 50 is conveyed to the assembling robot device 150 by a different transfer robot 70. Subsequently, the assembling robot device 20 and 150 to which the respective workpieces W4 and W6 are conveyed complete the remaining assembly works.

Thus, in the production system 2, similarly to the production system 1, the system controller 60 acquires the work-delay information on the delaying robot devices (for example, the assembling robot devices 40 and 50) in which the assembly works are delayed compared with a predetermined assembly time among the plurality of assembling robot devices 10 to 50 and 110 to 150. At the same time, the system controller 60 acquires the work-ready information on the substitutive robot devices (for example, the assembling robot devices 20 and 150) that can substitutively perform the assembly works being performed in the delaying robot devices. Subsequently, based on the result of cross-checking the acquired work-delay information and work-ready information, the system controller 60 conveys the workpieces from the delaying robot devices to the substitutive robot devices using the transfer robot 70. Therefore, the production system 2 effectively utilizes the assembling robot devices (the substitutive robot devices) in the ready states regardless of the assembling robot devices in the upstream side or the assembling robot devices in the downstream side of the production process, further, regardless of the assembling robot devices in the different production group (manufacture group) or not. Accordingly, the production system 2 can reduce the work delay in the robot with a more flexible system configuration.

This disclosure is not limited to the above-described embodiments. This disclosure can be modified in various ways. For example, the system controller 60 or the device controller 18 and similar member of the respective assembling robot devices may include a storage unit that accumulates work history information. The work history information includes, for example, information related to unfinished assembly of the delaying robot device and information related to substitutively performed assembly of the substitutive robot device.

In this case, the system controller 60 or each of the device controller 18 and similar unit may control at least one of the assemblies substitutively performed by the plurality of assembling robot device 10 and similar device and the conveyance of the workpiece by the transfer robot 70, based on this work history information accumulated in the storage unit. In this case, the use of the history information allows the production system 1 or 2 to have a learning function. Accordingly, the production system 1 or 2 can efficiently reduce information volume to be used. As a result, this ensures a faster process speed of the production system 1 or 2.

In the above-described embodiments, the transfer robot 70 is used to convey the workpiece in the middle of the assembly from the delaying robot device to the substitutive robot device. However, as the member for this conveyance, for example, the belt conveyor or the robot arm 12 and similar member of the assembling robot device 10 and similar device may be used. In the above-described embodiments, the processings such as detection of the delaying robot device or extraction of the substitutive robot device are performed by the system controller 60. A part or all of these processings may be performed by, for example, the device controller 18 and similar member of the assembling robot device 10 and similar device.

In the above-described first and second embodiments, the assembling robot has been described as a production robot in the production systems 1 and 2. The production systems 1 and 2 may include other production robots (or processing robot devices) that perform works other than assembly.

The determination of the substitutive robot devices by the determiner 65 may be made to determine: whether or not a different work as alternative processing is possible before the next hand-over time of the workpiece; or whether or not it is possible to perform processings of the same work items as the work items in the assembling robot device in which the work is delayed, using the work-ready information acquired by the ready-information acquirer 63 in advance.

The transfer-robot controller 68 may be a portion that controls the conveyance of the transfer robot 70 to move the workpiece among the respective devices in the case where a work delay occurs during assembly works in the assembling robot devices 10 to 50, so as to reduce the delay.

The system controller 60 or each of the device controller 18 and similar member may include a storage unit that accumulates work history information including information related to alternative processing in an assembling robot device detected to have the work delay and a different assembling robot device that is substitutively used. Additionally, in this case, the system controller 60 or each of the device controller 18 and similar member may control at least one of alternative processing in the plurality of assembling robot device 10 and similar member and the conveyance of the workpiece by the transfer robot 70, based on the work history information accumulated in this storage unit.

One embodiment of this disclosure may be the following first to eighth production system or first production method.

The first production system includes a plurality of production robots, a controller, and a conveying unit. The plurality of production robots share and perform a sequence of processing works on a workpiece. The controller controls the respective processing works in the plurality of production robots. The conveying unit can convey the workpiece between the plurality of production robots. The controller acquires work-delay information on a first production robot in which a processing work is delayed with respect to a predetermined processing time among the plurality of production robots. The controller also acquires work-ready information on a second production robot that can substitutively perform the processing work being performed by the first production robot. The controller conveys the workpiece from the first production robot to the second production robot using the conveying unit based on a result of cross-checking the acquired work-delay information and work-ready information.

In the second production system according to the first production system, the controller cross-checks the acquired work-delay information and work-ready information to determine whether or not the second production robot can substitutively process remaining processing work that is delayed in the first production robot within a predetermined time. The controller conveys the workpiece from the first production robot to the second production robot using the conveying unit in the case where the alternative processing is possible.

In the third production system according to the first or second production system, the controller acquires at least one of the work-delay information and the work-ready information that are progress information on the processing work from the plurality of production robots.

In the fourth production system according to the third production system, the controller detects the first production robot in which the processing is delayed and the second production robot that allows alternative processing based on the respective pieces of the progress information acquired from the plurality of production robots.

In the fifth production system according to the first or second production system, the controller acquires at least one of the work-delay information and the work-ready information that are progress information on the processing work only from a predetermined production robot among the plurality of production robots.

In the sixth production system according to any one of the first to fifth production systems, the first and second production robots each include a processing unit that can perform at least a part of the processing work in common.

The seventh production system according to any one of the first to sixth production system further includes a storage unit that accumulates work history information that includes information related to alternative processing in the first and second production robots. The controller controls at least one of alternative processing in the plurality of production robots and workpiece conveyance by the conveying unit based on the work history information.

In the eighth production system according to any one of the first to seventh production systems, the conveying unit is at least any one of a transfer robot, a belt conveyor, and arms of the plurality of production robots.

The first production method is a production method for producing a product using a plurality of production robots that share and perform a sequence of processing works on a workpiece. The first production method includes: a step of performing a predetermined processing work on the workpiece using the plurality of production robots; a step of acquiring, by a controller, work-delay information on a first production robot in which a processing work is delayed with respect to a predetermined processing time among the plurality of production robots; a step of acquiring, by the controller, work-ready information on a second production robot that can substitutively perform the processing work performed by the first production robot among the plurality of production robots; a step of conveying the workpiece from the first production robot in which the processing is delayed to the second production robot that allows alternative processing by control of the controller on the conveying unit based on a result of cross-checking the acquired work-delay information and work-ready information; and a step of performing the processing work on the conveyed workpiece by the second production robot.

The foregoing detailed description has been presented for the purposes of illustration and description. Many modifications and variations are possible in light of the above teaching. It is not intended to be exhaustive or to limit the subject matter described herein to the precise form disclosed. Although the subject matter has been described in language specific to structural features and/or methodological acts, it is to be understood that the subject matter defined in the appended claims is not necessarily limited to the specific features or acts described above. Rather, the specific features and acts described above are disclosed as example forms of implementing the claims appended hereto.

## Claims

1. A production system (1), comprising:
a plurality of production robots (10 to 50) configured to share and perform processing works on a workpiece;
a controller (60) configured to control the processing works by the plurality of production robots; and
a conveying member (70) configured to convey the workpiece between the plurality of production robots, wherein
the controller is configured to:
acquire work-delay information on a first production robot in which a processing work is delayed compared with a predetermined processing time;
acquire work-ready information on a second production robot that can substitutively perform the processing work being performed by the first production robot; and
convey the workpiece from the first production robot to the second production robot using the conveying member based on a result of cross-checking the work-delay information and the work-ready information.

2. The production system according to claim 1, wherein
the controller is configured to:
determine whether or not the second production robot can substitutively process an unfinished processing work of the first production robot within a predetermined time by cross-checking the acquired work-delay information and work-ready information; and
convey the workpiece from the first production robot to the second production robot using the conveying member when determined that the alternative processing is possible.

3. The production system according to claim 1 or 2, wherein
the controller is configured to acquire at least one of the work-delay information and the work-ready information that are progress information on the processing work from the plurality of production robots.

4. The production system according to claim 3, wherein
the controller is configured to detect the first production robot and the second production robot based on the progress information acquired from the plurality of production robots.

5. The production system according to claim 1 or 2, wherein
the controller is configured to acquire at least one of the work-delay information and the work-ready information that are progress information on the processing work from a predetermined production robot.

6. The production system according to any one of claims 1 to 5, wherein
the first and second production robots each include a working member configured to perform at least a part of the processing work in common.

7. The production system according to any one of claims 1 to 6, further comprising
a storage unit configured to accumulate work history information, the work history information including information related to unfinished assembly of the first production robot and information related to alternative processing of the second production robot, wherein
the controller is configured to control at least one of alternative processing by the plurality of production robots and workpiece conveyance by the conveying member based on the work history information.

8. The production system according to any one of claims 1 to 7, wherein
the conveying member is at least any one of a transfer robot, a belt conveyor, and arms of the plurality of production robots.

9. The production system according to any one of claims 1 to 8, wherein
the plurality of production robots includes:
a first production group that includes a plurality of production robots (10 to 50) configured to share and perform processing works on a workpiece; and
a second production group that includes a plurality of production robots (110 to 150) configured to share and perform processing works on a workpiece different from the processing works of the first production group.

10. A production method for producing a product using a plurality of production robots (10 to 50) configured to share and perform processing works on a workpiece, the production method comprising:
performing predetermined processing works on the workpiece by the plurality of production robots;
acquiring work-delay information on a first production robot in which a processing work is delayed compared with a predetermined processing time;
acquiring work-ready information on a second production robot that can substitutively perform the processing work being performed by the first production robot;
conveying the workpiece from the first production robot to the second production robot based on a result of cross-checking the acquired work-delay information and work-ready information; and
processing the conveyed workpiece by the second production robot.
